# EUROPEAN PATENT APPLICATION

(11) **EP 3 629 262 A1**
(43) Date of publication of application: **01.04.2020**
(21) Application number: 18196998.1
(22) Date of filing: 26.09.2018
(51) Int. Cl.: G06Q 10/06, G01N 33/00

(54) **A COMPUTER IMPLEMENTED METHOD AND A SYSTEM FOR CONTROLLING VEHICLE CABIN AIR QUALITY**

(71) Applicant: Valeo Systemes Thermiques-THS, 78322 Le Mesnil Saint Denis Cedex (FR)
(72) Inventor: DE PELSEMAEKER, Georges, 78322 Le Mesnil Saint Denis Cedex (FR); CLEMARON, Laetitia, 78322 Le Mesnil Saint Denis Cedex (FR); DEVEYCX, Marion, 78322 Le Mesnil Saint Denis Cedex (FR)
(74) Representative: Metz, Gaëlle

(57) **Abstract**

A computer-implemented method for controlling vehicle cabin air quality, comprising steps of: obtaining 101a context pollution data 210, indicative of pollution levels within a defined area 210a in which a vehicle is located; obtaining 101b real-time internal pollution measurement data 220, indicative of pollution levels within the vehicle cabin 220a; processing 102 the context pollution data 210 and the real-time local pollution measurement data 220 to determine discrepancy level between comparable pollution measurement values; determining 103 an action associated with the determined discrepancy level; executing 104 the determined action.

## Description

### FIELD OF THE INVENTION

The invention relates to a computer implemented method and a system for controlling vehicle cabin air quality. In particular, the invention relates to utilizing data relating to pollution to improve comfort of passengers present in a vehicle.

### BACKGROUND OF THE INVENTION

Air pollution is a serious concern for people because of its harmful effects to health - both in physical and psychological sense. Passengers travelling in vehicles are especially at risk, as the vehicles are part of traffic existing in urbanized areas, which tend to have higher concentration of air pollution and higher levels of pollutant gases and particles.

One way of remedying this disadvantageous situation is development of cabin air quality systems in order to prevent or limit exposure of vehicle passengers to polluted air.

Pollution levels are monitored by government agencies and private entities. The measurements are often provided in form of so called pollution maps. For example, a layer of visually represented information is added to a classic map, so that pollution concentration within a specific area or region can be determined and evaluated. Such maps usually have low time-resolution, which means that the information is updated relatively rarely, for example once an hour or once a day. Pollution map data is obtained for example by measuring pollution with a number of measuring stations or pollution measurement devices of a fixed position.

Further, vehicles can be equipped with pollution sensors and be adapted to provide pollution level values based on real-time and/or aggregated measurements, be it inside the vehicle cabin or outside of the vehicle, in its immediate vicinity.

A passenger travelling through an area with varying pollution concentration is bound to trust the air quality system of the vehicle in which he or she is located. The pollution is detectable by humans once it is already too late, as it begins to be noticeable to human senses as sight or smell only at high levels.

It would be advantageous to provide an improvement to the existing technology, which would enhance utilization of available data in order to improve passengers' well-being. In particular, it would be advantageous to provide solution to process pollution data so that the vehicle air quality system and passengers can understand and utilize them to enhance travel comfort and/or mitigate harmful effects of the pollution on health.

### SUMMARY OF THE INVENTION

The object of the invention is, among others, a computer-implemented method for controlling vehicle cabin air quality, comprising steps of: obtaining context pollution data, indicative of pollution levels within a defined area in which a vehicle is located; obtaining real-time internal pollution measurement data, indicative of pollution levels within the vehicle cabin; processing the context pollution data and the real-time local pollution measurement data to determine discrepancy level between comparable pollution measurement values; determining an action associated with the determined discrepancy level; executing the determined action.

Preferably, the context pollution data comprises averaged pollution values for the defined area with time resolution substantially smaller than the time resolution of real-time pollution values of the real-time internal pollution measurement data.

Preferably, the context pollution data comprises real-time external pollution measurement data, indicative of pollution levels outside the vehicle cabin in the immediate vicinity of the vehicle.

Preferably, the determined action is adapting an operation parameter of a vehicle air quality component.

Preferably, the determined action is adapting operation of a sensory stimulation device.

Preferably, the determined action is outputting the information about operation of the vehicle air quality system through an output device.

Preferably, the determined action is producing actionable control options through input/output means.

Another object of the invention is a vehicle cabin air quality system, comprising: communication means configured to provide context pollution data, indicative of pollution levels within a defined area in which a vehicle is located, and navigation data, representative of geographical position of the vehicle; pollution sensing means adapted to be mounted on a vehicle, configured to provide real-time internal pollution measurement data, indicative of pollution levels within the vehicle cabin; control means configured to determine discrepancy level between comparable pollution measurement values of the context pollution data and the real-time local pollution measurement data and an action associated with the determined discrepancy level; output means configured to execute the determined action.

Preferably, the pollution sensing means further comprise pollution sensors which measure air pollution levels outside the vehicle, in its immediate vicinity.

Preferably, the pollution sensing means can supplement the measurement data about pollution level outside the vehicle to context pollution data in order to implement map modelisation. Multiplication of data may allow to improve accuracy of the map and, thanks to assimilation of real-time data, time resolution of context pollution can be improved.

Preferably, the output means is a vehicle air quality component.

Preferably, the output means is a sensory stimulation device selected from the group comprising: vehicle ambient lighting system, built-in visual screen, built-in touch screens, a fragrance diffuser, a speaker, or a vibration motor.

Preferably, the output means is an input/output means, adapted for controlling the air quality system of the vehicle or other systems of the vehicle, selected from the group comprising: a touch screen, a speech recognition system.

Another aspect of the invention is a computer-implemented method for controlling vehicle cabin air quality, comprising steps of: obtaining context pollution data, indicative of pollution levels within a defined area in which a vehicle is located; obtaining real-time internal pollution measurement data, indicative of pollution levels within the vehicle cabin; processing the context pollution data and the real-time local pollution measurement data to output hybrid pollution data comprising information from both sets of data.

Another object of the invention is a computer readable storage medium storing a program of instructions executable by a machine to perform a method as described above.

### BRIEF DESCRITPTION OF DRAWINGS

Examples of the invention will be apparent from and described in detail with reference to the accompanying drawings, in which:
Fig. 1 shows schematically an exemplary pollution data coverage;
Fig. 2 shows a flowchart presenting the method according to the invention;
Fig. 3 shows a schematic representation of a system according to invention;
Fig. 4 shows an example of visual contextualization of pollution data;
Fig. 5 shows another example of visual contextualization of pollution data;
Fig. 6 shows another example of visual contextualization of pollution data;
Fig. 7 shows another example of visual contextualization of pollution data;
Fig. 8 shows another example of visual contextualization of pollution data.

### DETAILED DESCRIPTION OF EMBODIMENTS

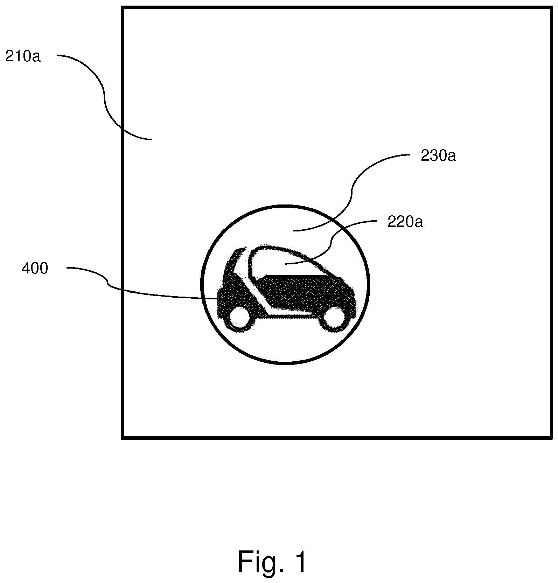

Fig. 1 shows schematically an exemplary pollution data coverage. A vehicle 400 is located within a specified area 210a. For the specified area 210a a context pollution data 210 is available from a data source, for example a data provider. The context pollution data 210 can be a pollution map data, which is indicative of air pollution levels within the specified area 210a. Such pollution map data can comprise information on particulate matter levels, carbon monoxide, sulfur oxides, nitrogen oxides, spread over a defined geographical area.

The vehicle 400 has a passenger cabin 220a, for which real-time internal pollution measurement data 220 is available. The real-time internal pollution measurement data 220 is indicative of pollution levels within the cabin 220, and represents pollution level to which the passengers of the vehicle 400 are directly exposed. It is assumed that the vehicle cabin 220a is separated from the outside of the vehicle 400 in a controlled manner, i.e. the air cannot freely move between the inside and the outside of the cabin unless the passenger or the vehicle air quality system enables such movement.

The context pollution data 210 can have a time-resolution lower than the real-time internal pollution measurement data 220.

Because the pollution map data gathers pollution levels from plurality of measuring stations distributed over the specified area 210a, and takes into account further data representative of for instance weather or the terrain characteristics, as well as satellite images for the atmosphere gas analysis, it can also comprise forecasts concerning the pollution values over the specified area, as well as predictions on missing data.

Further, the context pollution data 210 can comprise real-time external pollution measurement data 230, indicative of pollution levels outside the vehicle cabin 220a in the immediate vicinity 230a of the vehicle 400. The time resolution for the real-time external pollution measurement data 230 can be substantially the same with respect to the time resolution for the real-time internal pollution measurement data 220. It can also be different, depending on specific needs.

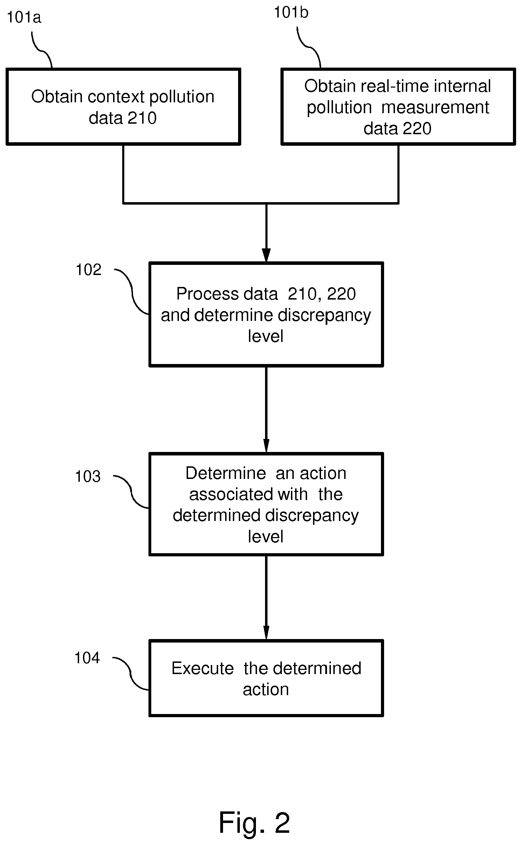

Fig. 2 presents a method according to the invention. Firstly, the method comprises obtaining 101a the context pollution data 210 and obtaining 101b real-time internal pollution measurement data 220. Both data sets 210, 220 can be obtained at the same time or at different times, but preferably both are up-to-date to the best degree before moving to the next step.

In the next step, the method comprises processing 102 the context pollution data 210 and the real-time local pollution measurement data 220 to determine discrepancy level between comparable pollution measurement values. In particular, the comparable pollution measurement values are compared to determine to what degree they differ between each other. For example, the context pollution data 210 may indicate a first pollution level, indicative of pollution value estimated for the exact position of the vehicle based on the pollution map and navigation data, while the real-time local pollution measurement data 220 can indicate a second pollution level, indicative of measured pollution level inside the cabin. The exact difference, i.e. the discrepancy level, can be thus determined between the first pollution value and the second pollution value.

In another example, it is envisaged that only an occurrence of difference as such is determined. For example, the difference as such can indicate that pollution level inside the cabin is lower than pollution level outside the cabin, or other way around.

In yet another example, it is envisaged that there is specified in the system a plurality of discrepancy levels, determined by value ranges. Once the difference between measured pollution values is calculated, it is compared with available discrepancy levels and it is associated with the closest, i.e. the most appropriate one.

It is understood that pollution data 210, 220 comprise values relating to several pollution particles and/or gasses, and that the respective values are compared. Further, it is envisaged that some values, for example values of specific pollutants, are missing from at least one of the data sets, but can nevertheless be estimated or calculated to a reasonable degree of confidence. In such case, those estimates are then incorporated into the data sets 210, 220 and processed accordingly to determine the discrepancy level.

In yet another example, if the values relating several pollution particles and/or gasses are processed, e.g. compared, then the discrepancy levels can be determined for each of them separately, or in groups.

In the next step, the method comprises determining 103 an action associated with the determined discrepancy level. There can be a plurality of actions, each associated with the specific discrepancy level. By action it is understood a determined behavior of the output means which can be executed once it is triggered by control means. It is understood that if multiple discrepancy levels are determined, for multiple pollution particles and/or gasses, then each discrepancy level can have a separate associated action. The discrepancy levels and/or actions can also be grouped together according to specific applications.

An action can be for example adapting an operation parameter of a vehicle air quality component. For instance, if the vehicle air quality components are air flaps of the HVAC system, the operation parameter subject to adapting can be the angular position of flaps. Similarly, if the vehicle air quality component is a window, the operation parameter can be its position, which in turn is related to the degree to which the cabin is exposed to the outside environment.

Another example of an action can be maintaining the current operation of the vehicle air quality system without changes. This action can be executed when the context pollution data indicates a pollution level higher than the pollution level inside the cabin of the vehicle, or if there is no option to further lower the pollution level within the cabin.

Another example of a determined action can be adapting operation of a sensory stimulation device. The sensory stimulation devices can be those which stimulate sight, hearing, smelling and/or touch (e.g. by means of vibrations). For example, upon determining a discrepancy level associated with high pollution outside the vehicle, the windows can become tinted in one color, for example red, while the ambient lightening inside the cabin can assume a second color, for example green, so that the efficiency of the vehicle air quality system can be evaluated by passengers. In another example, upon determining a discrepancy level associated with high pollution outside the vehicle, the determined action can be to execute production of acoustic signal indicative of high contrast between pollution level between the outside and the inside of the vehicle's cabin.

Another example of a determined action can be outputting the information about operation of the vehicle air quality system through output devices, such as a visual screen, for example a touch screen. This can be a built-in touch screen of the vehicle, or a mobile device connected to the vehicle's system, for example a mobile phone with a software adapted for cooperation with the vehicle's air quality system. For example, the information representative of the context pollution data can be visualized in parallel with visualization of real-time internal pollution measurement data. Various methods of visualization can be utilized.

Another example of a determined action can be producing actionable control options through input/output means. The input/output means can be for example a visual screen, for example a touch screen, or a speech recognition system adapted for controlling the air quality system of the vehicle or other systems of the vehicle. The actionable control options can be communicated to the passenger of the vehicle and then, upon validation, can execute specific behavior of the system. This can be utilization of vehicle maintenance services, activation of vehicle air quality components etc.

It is understood various actions as explained above, can be executed exclusively or in parallel, for example in groups.

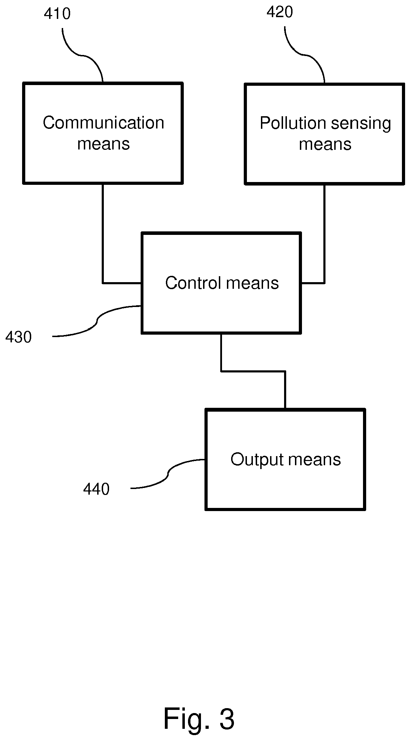

Fig. 3 presents a schematic representation of a system according to invention. The system comprises communication means 410, pollution sensing means 420, control means 430 and output means 440.

The communication means 410 are adapted to receive and send wireless signals, such as navigation signals, for example GPS signals or the like. The communication means 410 are further adapted to obtain the context pollution data 210, for example in form of the pollution map data, which is indicative of air pollution levels within the specified area 210a, from a data provider. The communication means 410 can be adapted to provide internet connection to the system. All received data is supplied to and from control means 430.

The pollution sensing means 420 comprise pollution sensors which measure air pollution levels inside the cabin of the vehicle. The pollution sensing means 420 can further comprise pollution sensors which measure air pollution levels outside the vehicle, in its immediate vicinity.

The control means 430 are adapted to receive data from pollution sensing means 420 as well as from the communication means 410. In particular, the control means 430 are adapted to obtain context pollution data 210, indicative of pollution levels within a defined area 210a in which a vehicle is located, and obtain real-time internal pollution measurement data 220, indicative of pollution levels within the vehicle cabin 220a. The control means 430 are further configured to process the context pollution data 210 and the real-time local pollution measurement data 220 to determine discrepancy level between comparable pollution measurement values. The control means 430 are further configured to determine an action associated with the determined discrepancy level and initiate execution of the determined action. The control means 440 can comprise memory for storing data regarding discrepancy levels and action associated with said discrepancy levels.

The system further comprises output means 440. These are adapted to execute the determined action upon signal from the control means 430. The output means 440 can be vehicle air quality components, such as air flaps, windows. The output means 440 can be also sensory stimulation devices, such as vehicle ambient lighting system, built-in visual screens, built-in touch screens, fragrance diffusers, speakers, vibration motors. The output means 440 can also be input/output means, for example a touch screen, or a speech recognition system adapted for controlling the air quality system of the vehicle or other systems of the vehicle.

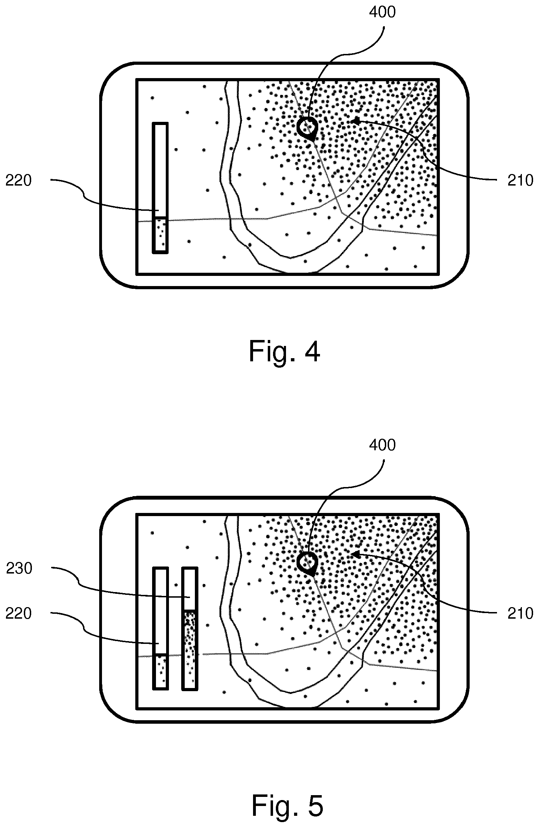

Fig. 4 shows an example of contextualization of pollution data by means of visual output means. The air quality component in this example is a sensory stimulation device in form of a visual screen, for example an onboard screen of the vehicle or a mobile screen at the disposal of the passenger. This can also be an input/output device. The vehicle 400 is indicated symbolically with respect to context pollution data 210, presented in form of pollution map. On the screen there is also an indicator representative of real-time internal pollution measurement data 220 value. Thus, the passenger can put the air quality inside the cabin 220a in comparison with the pollution level values from the pollution map, i.e. contextualize the air quality within the cabin. From here, it is possible to directly recognize whether the air quality system of the car is functioning properly and if yes, how efficiently. Conversely, if the air quality inside the cabin 220a is recognized by the passenger to be malfunctioning, appropriate steps can be taken to remedy the situation, for example by opening the windows. In this specific example, the indicator representative of the real-time internal pollution measurement data 220 value is a bar which allows for visual comparison between the internal pollution level and the context pollution level by means of common visual notion, such as color or dotted layering with densification associated with pollution degree.

Fig. 5 shows another example of visual contextualization of pollution data. It differs from example shown in Fig. 4 only in that on the screen there is also an indicator representative of the real-time external pollution measurement data 230.

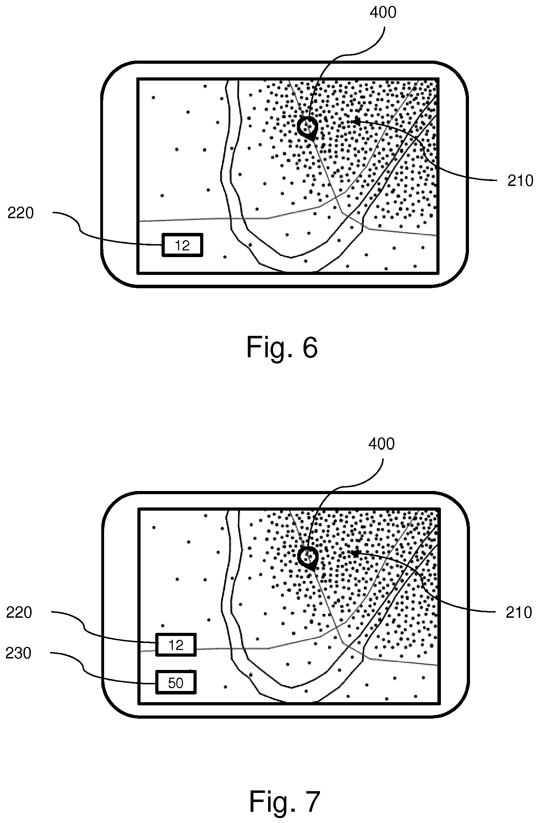

Fig. 6 shows another example of visual contextualization of pollution data. It differs from example shown in Fig. 4 only in that an indicator representative of real-time internal pollution measurement data 220 value is represented numerically.

Fig. 7 shows another example of visual contextualization of pollution data. It differs from example shown in Fig. 6 only in that on the screen there is also an indicator representative of the real-time external pollution measurement data 230 value, also represented numerically.

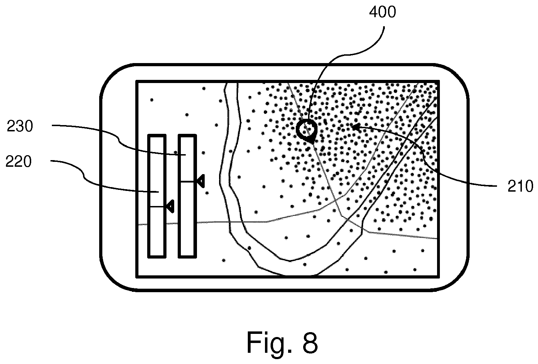

Fig. 8 shows another example of visual contextualization of pollution data. In this example the real-time external pollution measurement data 230 and real-time internal pollution measurement data 220 are represented by indicators with bars. The passanger can compare visually the difference between those values, without specifically disclosing measurements units or specific values. It is also envisaged to indicate context pollution data 210 in an analogous manner, as a third bar or instead of one of the bars representative of the other data 220, 230.

The above described hybridization of context pollution data and real-time pollution measurements inside the cabin allows to utilize advantages of both pollution map models, such as use of averaged values allowing anticipation, and equipped sensors, which on the other hand contribute real-time measurements and better accuracy. The pollution map enables anticipation in order to protect cabin from outside pollution, thanks to the possibility of obtaining forecasts on pollution over vast areas. The embedded sensors provide information regarding pollution in close vicinity of vehicles. These measurements are accurate because they are concern pollution in specific points and they are impacted by traffic, closer to the passenger.

The hybridation between pollution map and embedded sensors has the advantage to multiply data sources and thereby improve the accuracy of pollution map by assimilating mobile sensors data into pollution map model. This can also bring the advantage of increasing time resolution because of the integration of real-time data into pollution context, for example with an update rate of 10 to 15min.

It is understood that embodiments of the present invention can be carried out in form of hardware, software or a combination of both. Any such software can be stored in the form of a volatile or non-volatile storage, for example a storage like a ROM, whether erasable or rewritable or not, or in the form of memory such as, for example RAM, memory chips, device or integrated circuits or an optically or magnetically readable medium such as, for example, a CD, DVD, magnetic disk or magnetic tape. It is understood that the storage devices and storage media are embodiments of machine-readable storage that are suitable for storing program or programs that, when executed, implement embodiments of the present invention. Accordingly, embodiments provide a program comprising code for implementing a system or method as described and a machine readable storage storing such a program. Further, embodiments of the present invention may be conveyed electronically via any medium such as a communication signal carried over a wired or wireless connection and embodiments suitably encompass the same.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A computer-implemented method for controlling vehicle cabin air quality, comprising steps of:
- obtaining 101a context pollution data 210, indicative of pollution levels within a defined area 210a in which a vehicle is located;
- obtaining 101b real-time internal pollution measurement data 220, indicative of pollution levels within the vehicle cabin 220a;
- processing 102 the context pollution data 210 and the real-time local pollution measurement data 220 to determine discrepancy level between comparable pollution measurement values;
- determining 103 an action associated with the determined discrepancy level;
- executing 104 the determined action.

2. A method according to claim 1, wherein the context pollution data 210 comprises averaged pollution values for the defined area with time resolution substantially smaller than the time resolution of real-time pollution values of the real-time internal pollution measurement data 220.

3. A method according to any preceding claim, wherein the context pollution data 210 comprises real-time external pollution measurement data 230, indicative of pollution levels outside the vehicle cabin in the immediate vicinity 230a of the vehicle.

4. A method according to any of preceding claims, wherein the determined action is adapting an operation parameter of a vehicle air quality component.

5. A method according to any of preceding claims, wherein the determined action is adapting operation of a sensory stimulation device.

6. A method according to any of preceding claims, wherein the determined action is outputting the information about operation of the vehicle air quality system through an output device.

7. A method according to any of preceding claims, wherein the determined action is producing actionable control options through input/output means.

8. A vehicle cabin air quality system, comprising:
- communication means 410 configured to provide context pollution data 210, indicative of pollution levels within a defined area in which a vehicle is located, and navigation data, representative of geographical position of the vehicle;
- pollution sensing means 420 adapted to be mounted on a vehicle, configured to provide real-time internal pollution measurement data 220, indicative of pollution levels within the vehicle cabin;
- control means 430 configured to determine discrepancy level between comparable pollution measurement values of the context pollution data 210 and the real-time local pollution measurement data 220 and an action associated with the determined discrepancy level;
- output means 440 configured to execute the determined action.

9. A system according to claim 8, wherein the pollution sensing means 420 further comprise pollution sensors which measure air pollution levels outside the vehicle, in its immediate vicinity.

10. A system according to claim 8 or 9, wherein the output means 440 is a vehicle air quality component.

11. A system according to any of claims 8-10, wherein the output means 440 is a sensory stimulation device selected from the group comprising: vehicle ambient lighting system, built-in visual screen, built-in touch screens, a fragrance diffuser, a speaker, or a vibration motor.

12. A system according to any of claims 8-10, wherein the output means 440 is an input/output means, adapted for controlling the air quality system of the vehicle or other systems of the vehicle, selected from the group comprising: a touch screen, a speech recognition system.

13. A computer readable storage medium storing a program of instructions executable by a machine to perform a method according to any of claims 1-7.
